# EUROPEAN PATENT SPECIFICATION

(11) **EP 4 496 463 B1**
(45) Date of publication and mention of the grant of the patent: **03.06.2026**
(21) Application number: 22843432.0
(22) Date of filing: 19.12.2022
(51) Int. Cl.: A01D 34/73, A01D 34/82, A01D 34/00

(54) **LAWNMOWER CUTTING ARRANGEMENT AND LAWNMOWER**
RASENMÄHERSCHNEIDANORDNUNG UND RASENMÄHER
AGENCEMENT DE COUPE DE TONDEUSE À GAZON ET TONDEUSE À GAZON

(30) Priority: 21.03.2022 SE 2250346
(43) Date of publication of application: 29.01.2025
(73) Proprietor: Husqvarna AB, 561 82 Huskvarna (SE)
(72) Inventor: HAGBERG, Albin, 55314 JÖNKÖPING (SE)
(86) International application number: PCT/SE2022/051201
(87) International publication number: WO 2023/182909

(56) References cited:
- WO-A1-2015/165506
- WO-A1-2021/225494
- CN-U- 203 435 367
- US-A- 6 032 369
- US-A1- 2003 024 221
- US-B2- 8 640 588

## Description

### TECHNICAL FIELD

The present disclosure relates to a lawnmower cutting arrangement comprising a cutting unit and a skid plate. The present disclosure further relates to a lawnmower comprising a lawnmower cutting arrangement.

### BACKGROUND

A lawnmower is an apparatus capable of cutting grass of a lawn. Various types of lawnmowers exist on today's market. Examples are walk-behind mowers and self-propelled robotic lawnmowers. A walk-behind mower is a lawnmower usually comprising an elongated handle allowing a user to push, and/or to guide, the lawnmower. Some walk-behind mowers comprise a propulsion arrangement configured to drive one or more wheels of the lawnmower. Walk-behind mowers lacking a propulsion arrangement are sometimes referred to as "push mowers". Some lawnmowers comprise a power unit in the form of an electric motor configured to rotate the cutting unit and some lawnmowers comprise a power unit in the form of a combustion engine configured to rotate the cutting unit.

A self-propelled robotic lawnmower is a mower capable of cutting grass in areas in an autonomous manner. Some robotic lawnmowers require a user to set up a border wire around a lawn that defines the area to be mowed. Such robotic lawnmowers use a sensor to locate the wire and thereby the boundary of the area to be trimmed. In addition to the wire, robotic lawnmowers may also comprise other types of positioning units and sensors, for example sensors for detecting an event, such as a collision with an object within the area.

The robotic lawnmower may move in a systematic and/or random pattern to ensure that the area is completely cut. A robotic lawnmower usually comprises one or more batteries and one or more electrically driven cutting units being powered by the one or more batteries. In some cases, the robotic lawnmower uses the wire to locate a recharging dock used to recharge the one or more batteries. Generally, robotic lawnmowers operate unattended within the area in which they operate. Examples of such areas are lawns, gardens, parks, sports fields, golf courts and the like.

A skid plate is a disc-like device attached below a cutting unit of a lawnmower and having a surface facing a ground surface during operation of the lawnmower. The skid plate is arranged so that it can rotate independently from the cutting unit. A skid plate reduces friction losses which otherwise arise in an engagement between the cutting unit and vegetation being cut. In this manner, a skid plate can reduce the energy required for cutting vegetation. Moreover, a skid plate can prevent damage of the cutting unit caused by collisions between the cutting unit and harder types of objects.

Some lawnmower cutting units comprise a cutting disc and a number of cutting members arranged at a periphery of the cutting disc via a respective fastener. The cutting members of a cutting unit become blunt during use. Therefore, after a certain operational time, the cutting members of the cutting unit are preferably replaced. Consequently, on some occasions, it may be wanted to remove the cutting members from the cutting disc and reinstall new cutting members, or sharpened cutting members, to the cutting disc.

Today, when changing cutting members of a cutting unit, a user first has to align the skid plate relative to the cutting unit such that holes provided in the skid plate are aligned with the fasteners of the cutting members and then hold both the skid plate and the cutting disc firmly while applying torque to release the fasteners, for example using a tool such as a screwdriver or a power tool. This is cumbersome and time consuming since the user must concentrate on both aligning, holding still, and at the same time find the correct position for the tool and apply the torque onto the fasteners. In this process, users risk cutting themselves on the cutting members, especially if a power tool is used to remove the fasteners.

Furthermore, generally, on today's consumer market, it is an advantage if products, such as lawnmowers and associated components, systems, and arrangements, have conditions and/or characteristics suitable for being manufactured and assembled in a cost-efficient manner.

The document WO 2021225494 A1 relates to a lawnmower cutter assembly comprising a knife carrier arrangement and a skid plate arrangement, which are axially held between an axial stop shoulder of the cutter drive shaft and an end piece rigidly connected to the cutter drive shaft, the end piece thereby vertically carrying the skid plate arrangement and the knife carrier arrangement. The cutter assembly may be attached to a lawnmower, which may be a robotic lawnmower. The document WO 2015165506 A1 relates to a robotic work tool system comprising a robotic work. The robotic work tool comprises a stationary hub and a rotatable shaft being supported by the hub. Also, a hub cover is releasably attached to the hub. The robotic work tool further comprises a skid plate extending radially outwards from the hub cover. The skid plate is arranged between the hub and the hub cover.

### SUMMARY

It is an object of the present invention to overcome, or at least alleviate, at least some of the above-mentioned problems and drawbacks.

According to a first aspect of the invention, the object is achieved by a lawnmower cutting arrangement comprising a cutting unit configured to be rotated around a rotation axis to cut grass. The cutting unit comprising a cutting disc and a number of cutting members arranged at a periphery of the cutting disc. The cutting arrangement comprises a skid plate attachable relative to the cutting unit such that the skid plate is free to rotate relative to the cutting unit around the rotation axis. The skid plate comprises at least one through hole arranged at a first radial distance from the rotation axis. The cutting disc comprises a number of unobstructed through holes each arranged such that at least a portion of the at least one through hole of the skid plate superimposes at least a portion of one through hole of the number of through holes of the cutting disc as seen in a direction parallel to the rotation axis when the skid plate is at a predetermined relative rotational position relative to the cutting disc.

Thereby, a lawnmower cutting arrangement is provided significantly facilitating the process of changing the number of cutting members of the cutting unit. This is because the skid plate can be rotationally locked to the cutting disc, at the predetermined relative rotational position relative to the cutting disc, by an elongated object being inserted into the at least one through hole of the skid plate and into one through hole of the number of through holes of the cutting disc.

In this manner, the skid plate can be fixated relative to the cutting unit at a correct position for replacement of cutting members in a manner capable of freeing one hand of the user from holding the skid plate and the cutting disc relative to each other and in a manner reducing the risk need for users cutting themselves on the cutting members in the process of replacing cutting members.

Accordingly, a lawnmower cutting arrangement is provided having conditions for a replacement of the cutting members of the cutting unit in a quicker, simpler, and more convenient manner, as well as in a safer manner.

In addition, due the features of the lawnmower cutting arrangement, a lawnmower cutting arrangement is provided allowing a fixation of the skid plate relative to the cutting unit without significantly adding complexity or manufacturing costs of the lawnmower cutting arrangement. Thus, a lawnmower cutting arrangement is provided having conditions and characteristics suitable for being manufactured and assembled in a cost-efficient manner.

Accordingly, a lawnmower cutting arrangement is provided overcoming, or at least alleviating, at least some of the above-mentioned problems and drawbacks. As a result, the above-mentioned object is achieved.

Optionally, the first radial distance is at least 50% of the radius of the skid plate. Thereby, a firm and reliable rotational lock can be ensured between the skid plate and the cutting disc when an elongated object is inserted into the at least one through hole of the skid plate and into one through hole of the number of through holes of the cutting disc.

Optionally, each of the number of through holes of the cutting disc is arranged at the first radial distance from the rotation axis. Thereby, the insertion of an elongated object into the at least one through hole of the skid plate and into one through hole of the number of through holes of the cutting disc can be facilitated. This is because such an elongated object can be inserted in an insertion direction parallel to the rotation axis of the skid plate and of the cutting unit due to the placements of the number of through holes of the cutting disc and of the at least one through hole of the skid plate. Moreover, a firmer and more reliable rotational lock between the skid plate and the cutting disc can be ensured.

Optionally, the diameter of the at least one through hole of the skid plate substantially corresponds to the diameter of each of the number of through holes of the cutting disc. Thereby, the insertion of an elongated object into the at least one through hole of the skid plate and into one through hole of the number of through holes of the cutting disc can be facilitated. This is because an elongated object having slightly smaller diameter than the at least one through hole of the skid plate and than each of the number of through holes of the cutting disc can be inserted into the at least one through hole of the skid plate and into one through hole of the number of through holes of the cutting disc. Moreover, due to these features, a firmer and more reliable rotational lock can be ensured between the skid plate and the cutting disc.

Optionally, each of the at least one through hole of the skid plate and each of the number of through holes of the cutting disc has a diameter of more than 2 mm. Thereby, a firm and reliable rotational lock between the skid plate and the cutting disc can be further ensured. This is because an elongated object having a diameter of at least 2 mm can be inserted into the at least one through hole of the skid plate and into one through hole of the number of through holes of the cutting disc.

Optionally, the cutting disc comprises two to six equally spaced through holes, preferably three equally spaced through holes. Thereby, the skid plate can be rotationally locked to the cutting unit at several predetermined relative rotational positions relative to the cutting disc, thereby further facilitating the process of replacing the cutting members of the cutting disc, while retaining rotational balance of the cutting disc.

Optionally, each of the number of cutting members is pivotally arranged at a periphery of the cutting disc. Thereby, a safer cutting unit is provided having conditions for operating in an energy-efficient manner.

Each of the number of cutting members is attached to the cutting disc by a fastener, and wherein the skid plate comprises a number of apertures each arranged to superimpose one fastener as seen in a direction parallel to the rotation axis when the skid plate is at the predetermined relative rotational position relative to the cutting unit. Thereby, the process of replacing the cutting members of the cutting unit is significantly facilitated. This is because a user may insert a tool, such as a screwdriver or a power tool, into the number of apertures of the skid plate to reach and release the fasteners when the skid plate is rotationally locked to the cutting disc at the predetermined relative rotational position relative to the cutting unit.

Each aperture of the number of apertures of the skid plate is separate from the at least one through hole of the skid plate. Likewise, the at least one through hole of the skid plate is/are separate from the number of apertures of the skid plate.

Optionally, the skid plate comprises the same number of apertures as the number of cutting members. Thereby, the process of replacing the cutting members of the cutting unit is significantly facilitated. This is because a user may insert a tool, such as a screwdriver or a power tool, into the number of apertures of the skid plate to reach and release all fasteners when the skid plate is rotationally locked to the cutting disc at the predetermined relative rotational position relative to the cutting unit.

Optionally, the cutting disc comprises at least one marking for indicating when the skid plate is at the predetermined relative rotational position relative to the cutting unit. Thereby, the process of inserting an elongated object into the at least one through hole of the skid plate and into one through hole of the number of through holes of the cutting disc is further facilitated. This is because a user can utilize the at least one marking of the cutting disc to orient the skid plate to the predetermined relative rotational position relative to the cutting disc before inserting an elongated object into the at least one through hole of the skid plate and into one through hole of the number of through holes of the cutting disc.

According to a second aspect of the invention, the object is achieved by a lawnmower comprising a lawnmower body and a motor configured to rotate the cutting unit around the rotation axis, and wherein the lawnmower comprises a lawnmower cutting arrangement according to some embodiments of the present disclosure.

Since the lawnmower comprises a lawnmower cutting arrangement according to some embodiments, a lawnmower is provided significantly facilitating the process of changing the number of cutting members of the cutting unit of the lawnmower.

Thus, a lawnmower is provided having conditions for a replacement of the cutting members of the cutting unit of the lawnmower in a quicker, simpler, and more convenient manner, as well as in a safer manner, without significantly adding complexity or manufacturing costs of the lawnmower.

Accordingly, a lawnmower is provided overcoming, or at least alleviating, at least some of the above-mentioned problems and drawbacks. As a result, the above-mentioned object is achieved.

The at least one through hole of the skid plate, and the number of through holes the cutting disc are arranged such that at least a portion of the at least one through hole of the skid plate and at least a portion of one of the number of through holes of the cutting disc superimpose the at least one structure as seen in a direction parallel to the rotation axis when the skid plate and the cutting unit are at a respective predetermined relative rotational position relative to the lawnmower body.

Thereby, the process of changing the number of cutting members of the cutting unit is further facilitated. This is because each of the skid plate and the cutting unit can be rotationally locked relative to the lawnmower body simply by inserting an elongated object into the at least one through hole of the skid plate, into one through hole of the number of through holes of the cutting disc and into the structure of the lawnmower body.

By rotationally locking the skid plate and the cutting unit relative to the lawnmower body, the risk of users cutting themselves on the cutting members in the process of replacing cutting members is further reduced. Moreover, the process of replacing cutting members can be performed in a further quicker, simpler, and more convenient manner.

Optionally, the at least one structure is arranged at the first radial distance from the rotation axis. Thereby, the insertion of an elongated object into the at least one through hole of the skid plate, into one through hole of the number of through holes of the cutting disc, and into the structure of the lawnmower body can be facilitated. This is because such an elongated object can be inserted in an insertion direction parallel to the rotation axis of the skid plate and of the cutting unit. Moreover, a firmer and more reliable rotational lock can be ensured between the skid plate, the cutting disc, and the lawnmower body.

Optionally, the at least one structure comprises one or more of a hole, an aperture, a recess, and a protrusion. Thereby, a firmer and more reliable rotational lock between the skid plate, the cutting disc, and the lawnmower body can be ensured.

Optionally, the lawnmower body comprises at least one marking for indicating when the skid plate and the cutting unit are at a respective predetermined relative rotational position relative to the lawnmower body. Thereby, the process of inserting an elongated object into the at least one through hole of the skid plate, into one through hole of the number of through holes of the cutting disc, and into the structure of the lawnmower body is further facilitated. This is because a user can utilize the at least one marking of the lawnmower body to orient the skid plate and the cutting disc to their respective predetermined relative rotational position relative to the lawnmower body before inserting an elongated object.

Optionally, the lawnmower is a self-propelled robotic lawnmower. Thereby, a self-propelled robotic lawnmower is provided significantly facilitating the process of changing the number of cutting members of the cutting unit of the self-propelled robotic lawnmower.

Thus, a self-propelled robotic lawnmower is provided having conditions for a replacement of the cutting members of the cutting unit in a quicker, simpler, and more convenient manner, as well as in a safer manner, without significantly adding complexity or manufacturing costs of the self-propelled robotic lawnmower.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a lawnmower according to some embodiments of the present disclosure,
Fig. 2 illustrates a perspective view of an underside of a lawnmower according to the embodiments illustrated in Fig. 1,
Fig. 3 illustrates a cross section of a portion of the lawnmower illustrated in Fig. 2, and
Fig. 4 illustrates a cutting assembly according to illustrated embodiments as seen in a direction coinciding with a rotation axis of a cutting unit.

### DETAILED DESCRIPTION

Aspects of the present invention will now be described more fully. Like numbers refer to like elements throughout. Well-known functions or constructions will not necessarily be described in detail for brevity and/or clarity.

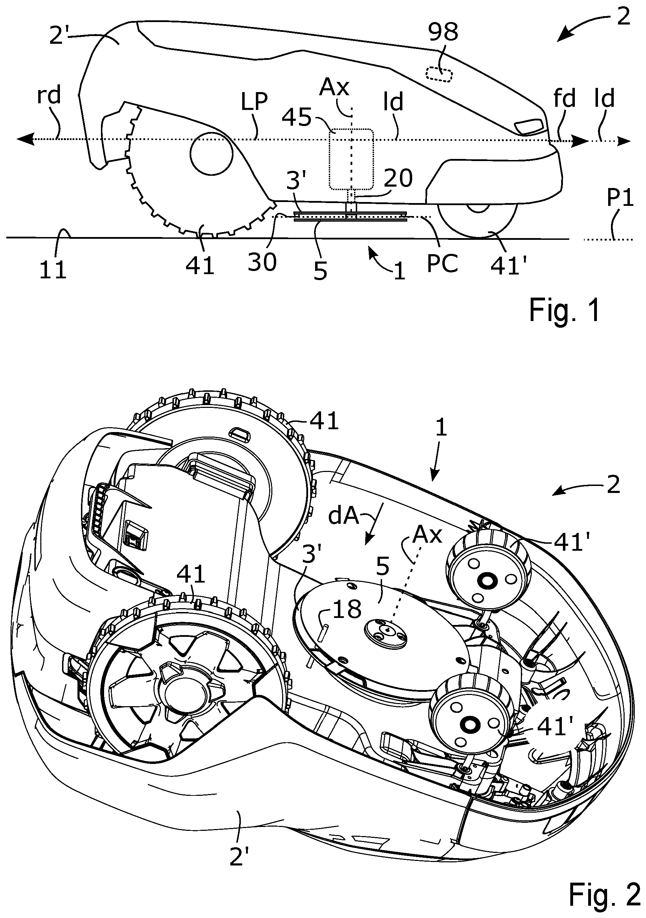

Fig. 1 schematically illustrates a lawnmower 2 according to some embodiments of the present disclosure. According to the illustrated embodiments, the lawnmower 2 is a self-propelled autonomous robotic lawnmower 2 capable of navigating and cutting grass in an autonomous manner in an area without the intervention or the control of a user. For reasons of brevity and clarity, the self-propelled autonomous robotic lawnmower 2 is in some places herein referred to as "the robotic lawnmower 2" or simply the "lawnmower 2".

According to further embodiments, the lawnmower 2 may be another type of lawnmower, such as a walk-behind mower or a push mower. According to the embodiments herein, the lawnmower 2 is a small or mid-sized lawnmower 2 configured to be used to cut grass in areas used for aesthetic and recreational purposes, such as gardens, parks, city parks, sports fields, lawns around houses, apartments, commercial buildings, offices, and the like.

The lawnmower 2 comprises a lawnmower body 2' and a number of lawnmower support members 41, 41' each configured to abut against a ground surface 8 in a first plane P1 during operation of the lawnmower 2 to support the lawnmower body 2'. The lawnmower body 2', as referred to herein, may also be referred to as a lawnmower chassis. Accordingly, the first plane P1 will extend along a ground surface 11 when the lawnmower 2 is positioned on a flat ground surface 11.

According to the illustrated embodiments, the lawnmower support members 41, 41' is wheels 41, 41' of the lawnmower 2. According to the illustrated embodiments, the lawnmower 2 comprises four wheels 41, 41', namely two drive wheels 41 and two support wheels 41'. The drive wheels 41 of the lawnmower 2 may each be powered by an electrical motor of the lawnmower 2 to provide motive power and/or steering of the lawnmower 2.

In Fig. 1, a longitudinal direction ld of the lawnmower 2 is indicated. The longitudinal direction ld of the lawnmower 2 extends in a longitudinal plane LP of the lawnmower 2. The longitudinal plane LP is parallel to the first plane P1. The longitudinal direction ld of the lawnmower 2 is thus parallel to the first plane P1 and thus also to a ground surface 11 when the lawnmower 2 is positioned onto a flat ground surface 11. Moreover, the longitudinal direction ld of the lawnmower 2 is parallel to a forward direction fd of travel of the lawnmower 2 as well as a reverse direction rd of travel of the lawnmower 2.

According to the illustrated embodiments, the drive wheels 41 of the lawnmower 2 are nonsteered wheels having a fix rolling direction in relation to the lawnmower body 2'. The respective rolling direction of the drive wheels 41 of the lawnmower 2 is substantially parallel to the longitudinal direction ld of the lawnmower 2. According to the illustrated embodiments, the support wheels 41' are non-driven wheels. Moreover, according to the illustrated embodiments, the support wheels 41' can pivot around a respective pivot axis such that the rolling direction of the respective support wheel 41' can follow a travel direction of the lawnmower 2.

As understood from the above, when the drive wheels 41, 41' of the lawnmower 2 are rotated at the same rotational velocity in a forward rotational direction, and no wheel slip is occurring, the lawnmower 2 will move in the forward direction fd indicated in Fig. 1. Likewise, when the drive wheels 41, 41' of the lawnmower 2 are rotated at the same rotational velocity in a reverse rotational direction, and no wheel slip is occurring, the lawnmower 2 will move in the reverse direction rd indicated in Fig. 1. The reverse direction rd is opposite to the forward direction fd.

According to the illustrated embodiments, the lawnmower 2 may be referred to as a fourwheeled rear wheel driven lawnmower 2. According to further embodiments, the lawnmower 2 may be provided with another number of wheels 41, 41', such as three wheels. Moreover, according to further embodiments, the lawnmower 2 may be provided with another configuration of driven and non-driven wheels, such as a front wheel drive or an all-wheel drive.

According to the illustrated embodiments, the lawnmower 2 comprises a control arrangement 98. The control arrangement 98 may be configured to control propulsion of the lawnmower 2, and steer the lawnmower 2, by controlling electrical motors of the lawnmower 2 arranged to drive the drive wheels 41 of the lawnmower 2. According to further embodiments, the control arrangement 98 may be configured to steer the lawnmower 2 by controlling the angle of steered wheels of the lawnmower 2. According to still further embodiments, the robotic lawnmower may be an articulated robotic lawnmower, wherein the control arrangement 98 may be configured to steer the robotic lawnmower by controlling the angle between frame portions of the articulated robotic lawnmower.

The control arrangement 98 may be configured to control propulsion of the lawnmower 2, and steer the lawnmower 2, so as to navigate the lawnmower 2 in an area to be operated. The lawnmower 2 may further comprise one or more sensors arranged to sense a magnetic field of a wire, and/or one or more positioning units, and/or one or more sensors arranged to detect an impending or ongoing collision event with an object. In addition, the lawnmower 2 may comprise a communication unit connected to the control arrangement 98.

The communication unit may be configured to communicate with a remote communication unit to receive instructions therefrom and/or to send information thereto. The communication may be performed wirelessly over a wireless connection such as the internet, or a wireless local area network (WLAN), or a wireless connection for exchanging data over short distances using short-wavelength, i.e. ultra-high frequency (UHF) radio waves in the industrial, scientific, and medical (ISM) band from 2.4 to 2.486 GHz.

The control arrangement 98 may be configured to control propulsion of the lawnmower 2, and steer the lawnmower 2, so as to navigate the lawnmower 2 in a systematic and/or random pattern to ensure that an area is completely covered, using input from one or more of the above described sensors and/or units. Furthermore, the lawnmower 2 may comprise one or more batteries arranged to supply electricity to components of the lawnmower 2. As an example, the one or more batteries may be arranged to supply electricity to electrical motors of the lawnmower 2 by an amount controlled by the control arrangement 98.

The lawnmower 2 comprises a lawnmower cutting arrangement 1. For reasons of brevity and clarity, the lawnmower cutting arrangement 1 is in some places herein referred to as "the cutting arrangement 1". The lawnmower cutting arrangement 1 comprises a cutting unit 3' configured to be rotated around a rotation axis Ax by a driveshaft 20 of a lawnmower 2 to cut vegetation such as grass. According to the illustrated embodiments, the cutting unit 3' comprises a cutting disc and a number of cutting members 30 pivotally arranged at a periphery of the cutting disc. The cutting unit 3' is configured to rotate in a cutting plane PC around the rotation axis Ax. The rotation axis Ax is perpendicular to the cutting plane PC. According to the illustrated embodiments, the cutting plane PC is substantially parallel to the first plane P1. According to embodiments herein, an angle between the cutting plane PC and the first plane P1 may be less than 10 degrees or less than 7 degrees.

The lawnmower 2 further comprises a motor 45 configured to rotate the cutting unit 3' by rotating the driveshaft 20. The motor 45 and the cutting assembly 1 may together be referred to as a cutting arrangement. According to the illustrated embodiments, the motor 45 is an electric motor 45. However, according to further embodiments, the lawnmower 2 may comprise another type of motor, such as an internal combustion engine. According to the illustrated embodiments, the driveshaft 20 is an output shaft of the motor 45. However, according to further embodiments, the lawnmower 2 may comprise a transmission between an output shaft of the motor 45 and the driveshaft 20 as referred to herein.

As indicated in Fig. 1, the cutting arrangement 1 comprises a skid plate 5. The skid plate 5 is arranged below the cutting unit 3' when the lawnmower 2 is positioned in an upright use position as is illustrated in Fig. 1. In other words, the skid plate 5 is located between the cutting unit 3' and a ground surface 11 when the lawnmower 2 is positioned in an upright use position on the ground surface 11 as is illustrated in Fig. 1.

According to the illustrated embodiments, the skid plate 5 is disc shaped, is arranged parallel to the cutting unit 3', and has a diameter slightly smaller than the cutting disc 3' of the cutting unit 3'. According to further embodiments, the skid plate 5 may have approximately the same diameter as the cutting disc 3' of the cutting unit 3'. As seen in Fig. 1, the cutting members 30 of the cutting unit 3' protrudes further out from the rotation axis Ax than the skid plate 5. In this manner, the cutting members 30 can cut vegetation in an efficient manner upon rotation of the cutting unit 3'.

**Fig. 2** illustrates a perspective view of an underside of a lawnmower 2 according to the embodiments illustrated in Fig. 1. In Fig. 2, the cutting arrangement 1 including the skid plate 5 and the cutting unit 3' can be more clearly seen.

The skid plate 5 is attachable relative to the cutting unit 3' such that the skid plate 5 is free to rotate relative to the cutting unit 3' around the rotation axis Ax. In other words, the skid plate 5 is arranged so that it can rotate independently from the cutting unit 3' around the rotation axis Ax. Thereby, the skid plate 5 can reduce frictional losses which otherwise arise in an engagement between the cutting unit 3' and vegetation being cut. In this manner, the skid plate 5 can reduce the energy required for cutting vegetation. Moreover, the skid plate 5 can prevent damage of the cutting unit 3' caused by collisions between the cutting unit 3' and harder types of objects.

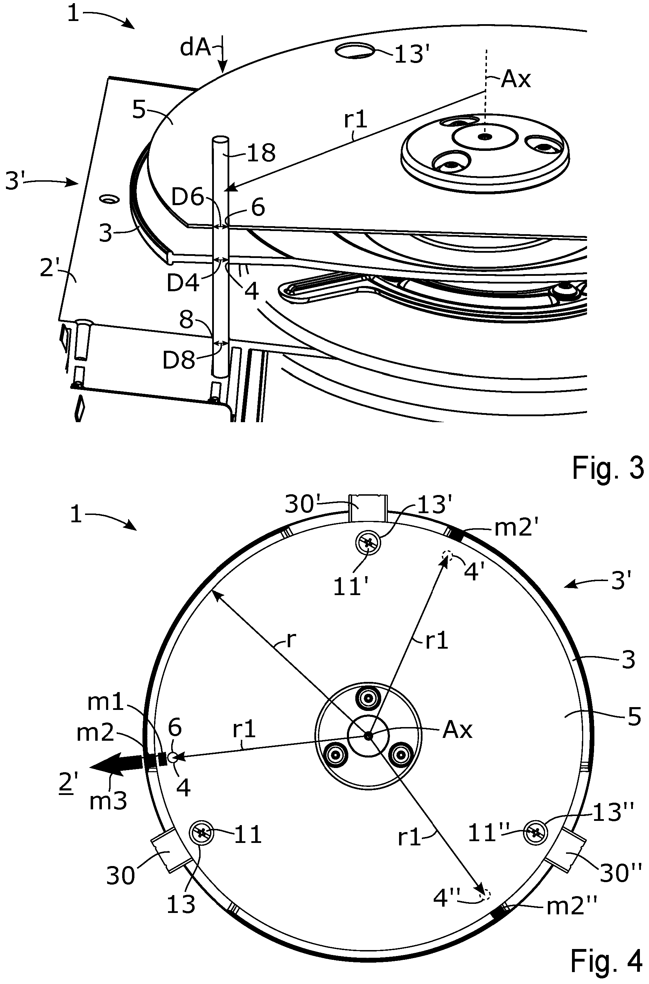

**Fig. 3** illustrates a cross section of a portion of the lawnmower 2 illustrated in Fig. 2. In Fig. 3, the cross section is made through a portion of the cutting assembly 1 and through a portion of the lawnmower body 2'. Moreover, in Fig. 3, the cutting disc 3 of the cutting unit 3' is indicated. As explained above, cutting unit 3' comprising the cutting disc 3 and a number of cutting members arranged at a periphery of the cutting disc 3.

As is indicated in Fig. 3, the skid plate 5 comprises at least one through hole 6. The at least one through hole 6 is arranged at a first radial distance r1 from the rotation axis Ax. Moreover, the cutting disc 3 comprises a number of unobstructed through holes 4 each arranged such that at least a portion of the at least one through hole 6 of the skid plate 5 superimposes at least a portion of one through hole 4 of the number of through holes 4 of the cutting disc 3 as seen in a direction dA parallel to the rotation axis Ax when the skid plate 5 is at a predetermined relative rotational position relative to the cutting disc 3.

In Fig. 3, one through hole 4 of the cutting disc 3 is seen. However, according to the illustrated embodiments, the cutting disc comprises three through holes 4, as is explained with reference to Fig. 4 below. In Fig. 2 and Fig. 3, the skid plate 5 is at a predetermined relative rotational position relative to the cutting disc 3.

Due to these features, an elongated object 18 can be inserted into the at least one through hole 6 of the skid plate 5 and into one through hole 4 of the number of through holes 4 of the cutting disc 3 to rotationally lock the skid plate 5 relative to the cutting unit 3'. This can significantly facilitate the process of replacing cutting members of the cutting unit 3' as is further explained in the following. As can be seen in Fig. 3, the skid plate comprises an aperture 13' for receiving a tool.

**Fig. 4** illustrates the cutting assembly 1 according to the illustrated embodiments as seen in a direction coinciding with the rotation axis Ax of the cutting unit 3'. In other words, in Fig. 4, the cutting unit 3' is seen in the direction dA parallel to the rotation axis Ax of the cutting unit 3' indicated in Fig. 2 and Fig. 3. Moreover, in Fig. 4, a portion of the lawnmower body 2' of the lawnmower 2 according to the embodiments illustrated in Fig. 1 - Fig. 3 is indicated.

As is best seen in Fig. 4, the cutting unit 3' according to the illustrated embodiments comprises three cutting members 30, 30', 30". According to further embodiments, the cutting unit 3' may comprise another number of cutting members 30, 30', 30", such as a number between one and six. According to the illustrated embodiments, each cutting member 30, 30', 30" is pivotally arranged at a periphery of the cutting disc 3.

Moreover, each of the number of cutting members 30, 30', 30" is attached to the cutting disc 3 by a fastener 11, 11', 11", in the form of a screw. According to further embodiments, each of the number of cutting members 30, 30', 30" may be attached to the cutting disc 3 by another type of fastener, such as a bolt.

According to embodiments herein, the skid plate 5 comprises the same number of apertures 13, 13', 13" as the number of cutting members 30, 30', 30" and the same number of apertures 13, 13', 13" as the number of fasteners 11, 11', 11". This is because each cutting member 30, 30', 30" is attached to the cutting disc 3 via one fastener 11, 11', 11" according to the illustrated embodiments.

Below, simultaneous reference is made to Fig. 1 - Fig. 4, if not indicated otherwise. Each aperture 13, 13', 13" is arranged to superimpose one fastener 11, 11', 11" as seen in the direction dA parallel to the rotation axis Ax when the skid plate 5 is at the predetermined relative rotational position relative to the cutting unit 3'. Thereby, the process of replacing the cutting members 30, 30', 30" of the cutting unit 3' is significantly facilitated. This is because a user may insert a tool, such as a screwdriver or a power tool, into the number of apertures 13, 13', 13" of the skid plate 5 to reach and release the fasteners 11, 11', 11" when the skid plate 5 is rotationally locked to the cutting disc 3 at the predetermined relative rotational position relative to the cutting unit 3' by the elongated object 18 as is illustrated in Fig. 2 and Fig. 3.

According to embodiments herein, each aperture 13, 13', 13" of the number of apertures 13, 13', 13" of the skid plate 5 is separate from the at least one through hole 6 of the skid plate 5. Likewise, according to embodiments herein, the at least one through hole 6 of the skid plate 5 is/are separate from the number of apertures 13, 13', 13" of the skid plate 5.

As is best seen in Fig. 3, the lawnmower body 2' comprises a structure 8. The lawnmower body 2' may comprise at least one structure 8 according to the embodiments described herein. According to the illustrated embodiments, the at least one structure 8, the at least one through hole 6 of the skid plate 5, and the number of through holes 4, 4', 4" of the cutting disc 3 are arranged such that at least a portion of the at least one through hole 6 of the skid plate 5 and at least a portion of one of the number of through holes 4, 4', 4" of the cutting disc 3 superimpose the at least one structure 8 as seen in the direction dA parallel to the rotation axis Ax when the skid plate 5 and the cutting unit 3' are at a respective predetermined relative rotational position relative to the lawnmower body 2'. In Fig. 2 - Fig. 4, the skid plate 5 and the cutting unit 3' are at a respective predetermined relative rotational position relative to the lawnmower body 2'.

According to the illustrated embodiments, the structure 8 comprises a hole provided in the lawnmower body 2'. According to further embodiments, the structure 8 may comprise another type of structure for engaging with an elongated object 18, such as an aperture, a recess, and/or a protrusion.

Moreover, according to the illustrated embodiments, the structure 8 is arranged at the first radial distance r1 from the rotation axis Ax. Likewise, the through hole 4 of the cutting disc 3 is arranged at the first radial distance r1 from the rotation axis Ax. In other words, according to the illustrated embodiments, the through hole 6 of the skid plate 5, the through hole 4 of the cutting disc 3, and the hole of the structure 8 are arranged at the same radial distance r1 from the rotation axis Ax. Thereby, an elongated object 18 can be inserted into the through hole 6 of the skid plate 5, the through hole 4 of the cutting disc 3, and the hole of the structure 8 to rotationally lock the skid plate 5 and the cutting unit 3' to the lawnmower body 2' of the lawnmower 2. In other words, according to the illustrated embodiments, the at least one through hole 6 of the skid plate 5 and the number of through holes 4, 4', 4" of the cutting disc 3 are configured such that an elongated object 18 can be inserted into the at least one through hole 6 of the skid plate 5 and into a through hole 4, 4', 4" of the cutting disc 3 in the direction dA parallel to the rotation axis Ax to rotationally lock the skid plate 5 to the cutting disc 3. In this manner, the process of replacing the cutting members 30, 30', 30" of the cutting unit 3' is significantly facilitated.

As is indicated in Fig. 4, according to the illustrated embodiments, the cutting disc 3 comprises three equally spaced through holes 4, 4', 4". In Fig. 4, two of the through holes 4', 4" are hidden behind the skid plate 5 and are therefore illustrated in dashed lines. According to further embodiments, the cutting disc 3 may comprise another number of equally spaced through holes 4, 4', 4", such as two to twenty, or two to six equally spaced through holes 4, 4', 4".

The feature that the through holes 4, 4', 4" are equally spaced means that they are arranged at the same radial distance r1 from the rotation axis Ax and that each through hole 4, 4', 4" has the same circumferential distance to two adjacent through holes 4, 4', 4". In embodiments in which the cutting disc 3 comprises two through holes only, the feature that the through holes are equally spaced means that they are arranged at the same radial distance r1 from the rotation axis Ax and that they are arranged along a straight line which crosses the rotation axis Ax. As understood from the above, according to the illustrated embodiments, each of the number of through holes 4, 4', 4" of the cutting disc 3 is arranged at the first radial distance r1 from the rotation axis Ax.

In other words, each through hole 4, 4', 4" is arranged such that at least a portion of the at least one through hole 6 of the skid plate 5 superimposes at least a portion of one through hole 4, 4', 4" of the number of through holes 4, 4', 4" of the cutting disc 3 as seen in a direction dA parallel to the rotation axis Ax when the skid plate 5 is at a predetermined relative rotational position relative to the cutting disc 3. In this manner, the skid plate 5 can be rotationally locked to the cutting unit 3' at several predetermined relative rotational positions relative to the cutting disc 3, thereby further facilitating the process of replacing the cutting members 30, 30', 30" of the cutting disc 3, while retaining rotational balance of the cutting disc 3.

Since the cutting disc 3 according to the illustrated embodiments comprises three equally spaced through holes 4, 4', 4", the cutting unit 3' can be rotationally locked to the skid plate 5 at three different predetermined relative rotational positions relative to the cutting disc 3. Each aperture 13, 13', 13" will superimpose one fastener 11, 11', 11" as seen in the direction dA parallel to the rotation axis Ax in each predetermined relative rotational position relative to the cutting disc 3, due to the equally spaced through holes 4, 4', 4" of the cutting disc 3.

As illustrated in Fig. 4, the cutting disc 3 comprises three markings m2, m2', m2" each indicating the rotational position of one through hole 4, 4', 4" of the cutting disc 3. Thereby, when the cutting disc 3 and the skid plate 5 are oriented such that one of the markings m2, m2', m2" is located radially outside of the through hole 6 of the skid plate 5, at least a portion of the through hole 6 of the skid plate 5 will superimpose at least a portion of the through hole 4, 4', 4" of the cutting disc 3.

Thus, the markings m2, m2', m2" can be used for indicating when the skid plate 5 is at a predetermined relative rotational position relative to the cutting unit 3'. The cutting disc 3 may comprise the same number of markings m2, m2', m2" as the number of through hole 4, 4', 4" of the cutting disc 3, wherein each marking m2, m2', m2" of the number of markings m2, m2', m2" indicates the rotational position of one through hole 4, 4', 4" of the cutting disc 3.

According to the illustrated embodiments, the skid plate 5 comprises one through hole 6 for rotationally locking the skid plate 5 to the cutting unit 3'. However, according to further embodiments, skid plate 5 may comprise another number of through holes 6 for rotationally locking the skid plate 5 to the cutting unit 3', such as a number between two and eight.

As seen in Fig. 4, the skid plate 5 according to the illustrated embodiments comprises a marking m1 for indicating the rotational position of the through hole 6 of the skid plate 5. The skid plate 5 may comprise the same number of markings m1 as the number of through hole 6 of the skid plate 5, wherein each marking m1 of the number of markings m1 indicates the rotational position of one through hole 6 of the skid plate 5. Thus, the marking m1 can be used for indicating when the skid plate 5 is at a predetermined relative rotational position relative to the cutting unit 3'. As understood from the above described, the skid plate 5 is at a predetermined relative rotational position relative to the cutting unit 3' when the marking m1 of the skid plate 5 is aligned with one marking m2, m2', m2" of the cutting disc 3.

Furthermore, according to the illustrated embodiments, the lawnmower body 2' comprises a marking m3 for indicating when the skid plate 5 and the cutting unit 3' are at a respective predetermined relative rotational position relative to the lawnmower body 2'. According to the illustrated embodiments, the marking m3 of the lawnmower body 2' indicates the location of the structure 8 of the lawnmower body 2'.

Thus, due to the markings m1, m2, m2', m2", m3, a user may orient, i.e., rotate, the skid plate 5 and the cutting disc 3 such that one marking m2, m2', m2" of the cutting disc 3 and one marking m1 of the skid plate 5 are aligned with the marking m3 of the lawnmower body 2'. As a result, the skid plate 5 and the cutting unit 3' assumes the respective predetermined relative rotational position relative to the lawnmower body 2' in a quick and simple manner. The user may then insert the elongated object 18 into the through hole 6 of the skid plate 5, the through hole 4 of the cutting disc 3, and the hole of the structure 8 to rotationally lock the skid plate 5 and the cutting unit 3' to the lawnmower body 2' of the lawnmower 2.

Each of the markings m1, m2, m2', m2", m3 may be provided by painting or lacquering a portion of the skid plate 5, the cutting disc 3 and/or the lawnmower body 2'. As an alternative, or in addition, each of the markings m1, m2, m2', m2", m3 may be provided by a recess, a protrusion, a groove, or other type of structure visible to a user in a surface of the skid plate 5, the cutting disc 3 and/or the lawnmower body 2'.

As is best seen in Fig. 3, the diameter D6 of the through hole 6 of the skid plate 5 substantially corresponds to the diameter D4 of the through hole 4 of the cutting disc 3. The through holes 4, 4', 4" of the cutting disc 3 have the same diameter D4. Thus, according to the illustrated embodiments, the diameter D6 of the at least one through hole 6 of the skid plate 5 substantially corresponds to the diameter D4 of each of the number of through holes 4, 4', 4" of the cutting disc 3. Likewise, according to the illustrated embodiments, the diameter D8 of the hole of the structure 8 substantially corresponds to the diameter D4 of the through holes 4, 4', 4" of the cutting disc 3.

In this manner, an elongated object 18 having a slightly smaller diameter than the diameter D4, D6, D8 can be inserted into the through hole 6 of the skid plate 5, the through hole 4 of the cutting disc 3, and the hole of the structure 8 in a quick and simple manner. According to the illustrated embodiments, the elongated object 18 is a rod-shaped object which may be provided together with the cutting assembly 1 according to the embodiments herein. However, another type of elongated object may be utilized for rotationally locking the skid plate 5 and the cutting unit 3' to the lawnmower body 2' of the lawnmower 2, such as an elongated screwdriver, or the like.

The hole of the structure 8 of the lawnmower body 2' may be slightly conical to retain the elongated object 18 when a portion of the elongated object 18 is inserted into hole of the structure 8.

According to the illustrated embodiments, each aperture 13, 13', 13" of the number of apertures 13, 13', 13" has a larger diameter than the diameter of the at least one through hole 6 of the skid plate 5 and than the diameter of the number of through holes 4, 4', 4" of the cutting disc 3. According to some embodiments, the diameter of each aperture 13, 13', 13" of the number of apertures 13, 13', 13" may be at least 10%, or at least 25%, larger than the diameter of the at least one through hole 6 of the skid plate 5 and the diameter of the number of through holes 4, 4', 4" of the cutting disc 3. In this manner, it can be ensured that a user can insert a tool, such as a screwdriver or a power tool, into the number of apertures 13, 13', 13" of the skid plate 5 in a simple and convenient manner to reach and release the fasteners 11, 11', 11" when the skid plate 5 is rotationally locked to the cutting disc 3 at the predetermined relative rotational position relative to the cutting unit 3'.

According to some embodiments, each of the at least one through hole 6 of the skid plate 5 and each of the number of through holes 4, 4', 4" of the cutting disc 3 may have a diameter D4, D6 of more than 2 mm, or more than 3 mm.

Furthermore, according to the illustrated embodiments, the first radial distance r1 is approximately 92% of the radius r of the skid plate 5. According to further embodiments, the first radial distance r1 may be at least 50%, or at least 70% of the radius r of the skid plate 5. Thereby, a firm and reliable rotational lock can be ensured between the skid plate 5 and the cutting disc 3 when an elongated object 18 is inserted into the at least one through hole 6 of the skid plate 5 and into one through hole 4, 4', 4" of the number of through holes 4, 4', 4" of the cutting disc 3.

According to the illustrated embodiments, the radius r of the skid plate 5 is approximately 10 cm. According to further embodiments, the radius r of the skid plate 5 may be between 5 and 25 cm, or may be between 7 and 15 cm.

The wording "substantially parallel to", as used herein, may encompass that the angle between the objects referred to is less than 10 degrees, or is less than 7 degrees.

The wording "substantially corresponds to", as used herein, may encompass that the aspects, objects, distances, or measurements referred to deviates less than 10% from each other.

According to the illustrated embodiments, each through hole 4, 4', 4" of the number of through holes 4, 4', 4" of the cutting disc 3 is unobstructed. The feature that each through hole 4, 4', 4" of the number of through holes 4, 4', 4" of the cutting disc 3 is unobstructed means that the through hole 4, 4', 4" is free, open, and unhindered and that no other object or objects is/are attached to or in the through hole 4, 4', 4". In other words, feature that each through hole 4, 4', 4" of the number of through holes 4, 4', 4" of the cutting disc 3 is unobstructed means that the through hole 4, 4', 4" is free for insertion of an elongated object 18 into and through the through hole 4, 4', 4" without having to remove any part, object, or component attached to or in the through hole 4, 4', 4" of the cutting disc 3.

Therefore, throughout this disclosure, the wording "through hole 4, 4', 4"" may be replaced with the wording "unobstructed through hole 4, 4', 4"", "free through hole 4, 4', 4"", or "open through hole 4, 4', 4"". Likewise, the wording "number of through holes 4, 4', 4" may be replaced with the wording "number of unobstructed through holes 4, 4', 4"", "number of free through holes 4, 4', 4"", or "number of open through holes 4, 4', 4"".

Likewise, according to the illustrated embodiments, the at least one through hole 6 of the skid plate 5 is unobstructed which means that the at least one through hole 6 of the skid plate 5 is free, open, and unhindered and that no other object or objects is/are attached to or in the at least one through hole 6. In other words, feature that the at least one through hole 6 of the skid plate 5 is unobstructed means that the at least one through hole 6 is free for insertion of an elongated object 18 into and through the through hole 6 without having to remove any part, object, or component attached to or in the at least one through hole 6 of the skid plate 5.

Therefore, throughout this disclosure, the wording "at least one through hole 6" may be replaced with the wording "at least one unobstructed through hole 6", "at least one free through hole 6", or "at least one open through hole 6".

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A lawnmower cutting arrangement (1) comprising a cutting unit (3') configured to be rotated around a rotation axis (Ax) to cut grass, the cutting unit (3') comprising a cutting disc (3) and a number of cutting members (30, 30', 30") arranged at a periphery of the cutting disc (3),
wherein the cutting arrangement (1) comprises a skid plate (5) attachable relative to the cutting unit (3') such that the skid plate (5) is free to rotate relative to the cutting unit (3') around the rotation axis (Ax), and
wherein each of the number of cutting members (30, 30', 30") is attached to the cutting disc (3) by a fastener (11, 11', 11"), and wherein the skid plate (5) comprises a number of apertures (13, 13', 13") each arranged to superimpose one fastener (11, 11', 11") as seen in a direction (dA) parallel to the rotation axis (Ax) when the skid plate (5) is at a predetermined relative rotational position relative to the cutting unit (3'),
**characterized in that** the skid plate (5) comprises at least one through hole (6) arranged at a first radial distance (r1) from the rotation axis (Ax), the at least one through hole (6) of the skid plate (5) being separate from the number of apertures (13, 13', 13") of the skid plate (5), and
wherein the cutting disc (3) comprises a number of unobstructed through holes (4, 4', 4") each arranged such that at least a portion of the at least one through hole (6) of the skid plate (5) superimposes at least a portion of one through hole (4, 4', 4") of the number of through holes (4, 4', 4") of the cutting disc (3) as seen in a direction (dA) parallel to the rotation axis (Ax) when the skid plate (5) is at the predetermined relative rotational position relative to the cutting disc (3),
and wherein the at least one through hole (6) of the skid plate (5) and the number of through holes (4, 4', 4") of the cutting disc (3) are configured such that an elongated object (18) can be inserted into the at least one through hole (6) of the skid plate (5) and into a through hole (4, 4', 4") of the cutting disc (3) to rotationally lock the skid plate (5) to the cutting disc (3).

2. The cutting arrangement (1) according to claim 1, wherein the first radial distance (r1) is at least 50% of the radius (r) of the skid plate (5).

3. The cutting arrangement (1) according to claim 1 or 2, wherein each of the number of through holes (4, 4', 4") of the cutting disc (3) is arranged at the first radial distance (r1) from the rotation axis (Ax).

4. The cutting arrangement (1) according to any one of the preceding claims, wherein the diameter (D6) of the at least one through hole (6) of the skid plate (5) substantially corresponds to the diameter (D4) of each of the number of through holes (4, 4', 4") of the cutting disc (3).

5. The cutting arrangement (1) according to any one of the preceding claims, wherein each of the at least one through hole (6) of the skid plate (5) and each of the number of through holes (4, 4', 4") of the cutting disc (3) has a diameter (D4, D6) of more than 2 mm.

6. The cutting arrangement (1) according to any one of the preceding claims, wherein the cutting disc (3) comprises two to six equally spaced through holes (4, 4', 4"), preferably three equally spaced through holes (4, 4', 4").

7. The cutting arrangement (1) according to any one of the preceding claims, wherein the skid plate (5) comprises the same number of apertures (13, 13', 13") as the number of cutting members (30, 30', 30").

8. The cutting arrangement (1) according to any one of the preceding claims, wherein the cutting disc (3) comprises at least one marking (m2, m2', m2") for indicating when the skid plate (5) is at the predetermined relative rotational position relative to the cutting unit (3').

9. A lawnmower (2) comprising a lawnmower body (2') and a motor (45) configured to rotate the cutting unit (3') around the rotation axis (Ax), and wherein the lawnmower (2) comprises a lawnmower cutting arrangement (1) according to any one of the preceding claims.

10. The lawnmower (2) according to claim 9, wherein the lawnmower body (2') comprises at least one structure (8), and wherein the at least one structure (8), the at least one through hole (6) of the skid plate (5), and the number of through holes (4, 4', 4") of the cutting disc (3) are arranged such that at least a portion of the at least one through hole (6) of the skid plate (5) and at least a portion of one of the number of through holes (4, 4', 4") of the cutting disc (3) superimpose the at least one structure (8) as seen in a direction (dA) parallel to the rotation axis (Ax) when the skid plate (5) and the cutting unit (3') are at a respective predetermined relative rotational position relative to the lawnmower body (2').

11. The lawnmower (2) according to claim 10, wherein the at least one structure (8) is arranged at the first radial distance (r1) from the rotation axis (Ax).

12. The lawnmower (2) according to claim 10 or 11, wherein the at least one structure (8) comprises one or more of a hole, an aperture, a recess, and a protrusion.

13. The lawnmower (2) according to any one of the claims 9 - 12, wherein the lawnmower body (2') comprises at least one marking (m3) for indicating when the skid plate (5) and the cutting unit (3') are at a respective predetermined relative rotational position relative to the lawnmower body (2').

14. The lawnmower (2) according to any one of the claims 9 - 13, wherein the lawnmower (2) is a self-propelled robotic lawnmower (2).

## Patentansprüche

1. Rasenmäherschneidanordnung (1), umfassend eine Schneideinheit (3'), die konfiguriert ist, um um eine Drehachse (Ax) gedreht zu werden, um Gras zu schneiden, wobei die Schneideinheit (3') eine Schneidscheibe (3) und eine Anzahl von Schneidelementen (30, 30', 30") umfasst, die an einem Umfang der Schneidscheibe (3) angeordnet sind,
wobei die Schneidanordnung (1) eine Gleitplatte (5) umfasst, die relativ zur Schneideinheit (3') so angebracht werden kann, dass sich die Gleitplatte (5) relativ zur Schneideinheit (3') um die Drehachse (Ax) frei drehen kann, und
wobei jedes der Schneidelemente (30, 30', 30") mit einem Befestigungselement (11, 11', 11") an der Schneidscheibe (3) befestigt ist und wobei die Gleitplatte (5) eine Anzahl von Öffnungen (13, 13', 13") umfasst, die jeweils so angeordnet sind, dass sie ein Befestigungselement (11, 11', 11") überlagern, gesehen in einer Richtung (dA) parallel zur Drehachse (Ax), wenn sich die Gleitplatte (5) in einer vorbestimmten relativen Drehposition relativ zur Schneideinheit (3') befindet,
**dadurch gekennzeichnet, dass** die Gleitplatte (5) mindestens ein Durchgangsloch (6) umfasst, das in einem ersten radialen Abstand (r1) von der Drehachse (Ax) angeordnet ist, wobei das mindestens eine Durchgangsloch (6) der Gleitplatte (5) von der Anzahl der Öffnungen (13, 13', 13") der Gleitplatte (5) getrennt ist, und
wobei die Schneidscheibe (3) eine Anzahl von unverdeckten Durchgangslöchern (4, 4', 4") umfasst, die jeweils so angeordnet sind, dass mindestens ein Teil des mindestens einen Durchgangslochs (6) der Gleitplatte (5) mindestens einen Teil eines Durchgangslochs (4, 4', 4") der Anzahl von Durchgangslöchern (4, 4', 4") der Schneidscheibe (3) überlagert, gesehen in einer Richtung (Ax) parallel zur Drehung der Drehachse (Ax), wenn die Gleitplatte (5) sich in der vorbestimmten relativen Drehposition relativ zur Schneidscheibe (3) befindet,
und wobei das mindestens eine Durchgangsloch (6) der Gleitplatte (5) und die Anzahl der Durchgangslöcher (4, 4', 4") der Schneidscheibe (3) konfiguriert sind, um ein längliches Objekt (18) in das mindestens eine Durchgangsloch (6) der Gleitplatte (5) und in ein Durchgangsloch (4, 4', 4") der Trennscheibe (3) einführen zu können, um die Gleitplatte (5) drehfest mit der Trennscheibe (3) zu verbinden.

2. Schneidanordnung (1) nach Anspruch 1, wobei der erste radiale Abstand (r1) mindestens 50 % des Radius (r) der Gleitplatte (5) beträgt.

3. Schneidanordnung (1) nach Anspruch 1 oder 2, wobei jedes der Anzahl von Durchgangslöchern (4, 4', 4") der Schneidscheibe (3) in einem ersten radialen Abstand (r1) von der Drehachse (Ax) angeordnet ist.

4. Schneidanordnung (1) nach einem der vorstehenden Ansprüche, wobei der Durchmesser (D6) des mindestens einen Durchgangslochs (6) der Gleitplatte (5) im Wesentlichen dem Durchmesser (D4) jedes der Durchgangslöcher (4, 4', 4") der Schneidscheibe (3) entspricht.

5. Schneidanordnung (1) nach einem der vorstehenden Ansprüche, wobei jedes des mindestens einen Durchgangslochs (6) der Gleitplatte (5) und jedes der Anzahl von Durchgangslöchern (4, 4', 4") der Schneidscheibe (3) einen Durchmesser (D4, D6) von mehr als 2 mm aufweist.

6. Schneidanordnung (1) nach einem der vorstehenden Ansprüche, wobei die Schneidscheibe (3) zwei bis sechs gleichmäßig beabstandete Durchgangslöcher (4, 4', 4") umfasst, vorzugsweise drei gleichmäßig beabstandete Durchgangslöcher (4, 4', 4").

7. Schneidanordnung (1) nach einem der vorstehenden Ansprüche, wobei die Gleitplatte (5) dieselbe Anzahl von Öffnungen (13, 13', 13") wie die Anzahl von Schneidelementen (30, 30', 30") umfasst.

8. Schneidanordnung (1) nach einem der vorstehenden Ansprüche, wobei die Schneidscheibe (3) mindestens eine Markierung (m2, m2', m2") umfasst, um anzuzeigen, wenn sich die Gleitplatte (5) in der vorbestimmten relativen Drehposition relativ zur Schneideinheit (3') befindet.

9. Rasenmäher (2), umfassend einen Rasenmäherkörper (2') und einen Motor (45), der konfiguriert ist, um die Schneideinheit (3') um die Drehachse (Ax) zu drehen, wobei der Rasenmäher (2) eine Rasenmäherschneideinrichtung (1) nach einem der vorstehenden Ansprüche umfasst.

10. Rasenmäher (2) nach Anspruch 9, wobei der Rasenmäherkörper (2') mindestens eine Struktur (8) umfasst und wobei die mindestens eine Struktur (8), das mindestens eine Durchgangsloch (6) der Gleitplatte (5) und die Anzahl der Durchgangslöcher (4, 4', 4") der Schneidscheibe (3) so angeordnet sind, dass mindestens ein Abschnitt des mindestens einen Durchgangslochs (6) der Gleitplatte (5) und mindestens ein Abschnitt eines der Anzahl der Durchgangslöcher (4, 4', 4") der Schneidscheibe (3) die mindestens eine Struktur (8) überlagern, wenn die Gleitplatte (5) und die Schneideinheit (3') sich in einer jeweiligen vorbestimmten relativen Drehposition relativ zum Rasenmäherkörper (2') befinden, gesehen in einer Richtung (dA) parallel zur Drehachse (Ax).

11. Rasenmäher (2) nach Anspruch 10, wobei die mindestens eine Struktur (8) in dem ersten radialen Abstand (r1) von der Drehachse (Ax) angeordnet ist.

12. Rasenmäher (2) nach Anspruch 10 oder 11, wobei die mindestens eine Struktur (8) eines oder mehrere von einem Loch, einer Öffnung, einer Vertiefung und einem Vorsprung umfasst.

13. Rasenmäher (2) nach einem der Ansprüche 9 bis 12, wobei der Rasenmäherkörper (2') mindestens eine Markierung (m3) umfasst, um anzuzeigen, wenn sich die Gleitplatte (5) und die Schneideinheit (3') in einer jeweiligen vorbestimmten relativen Drehposition relativ zum Rasenmäherkörper (2') befinden.

14. Rasenmäher (2) nach einem der Ansprüche 9 bis 13, wobei der Rasenmäher (2) ein selbstfahrender Roboterrasenmäher (2) ist.

## Revendications

1. Agencement de coupe (1) pour tondeuse à gazon comprenant une unité de coupe (3') conçue pour tourner autour d'un axe de rotation (Ax) afin de couper du gazon, l'unité de coupe (3') comprenant un disque de coupe (3) et un certain nombre d'éléments de coupe (30, 30', 30") disposés au niveau d'une périphérie du disque de coupe (3),
dans lequel l'agencement de coupe (1) comprend une plaque de protection (5) pouvant être fixée par rapport à l'unité de coupe (3') de telle sorte que la plaque de protection (5) est libre de tourner par rapport à l'unité de coupe (3') autour de l'axe de rotation (Ax), et
dans lequel chacun du nombre d'éléments de coupe (30, 30', 30") est fixé au disque de coupe (3) par un élément de fixation (11, 11', 11"), et dans lequel la plaque de protection (5) comprend un certain nombre d'ouvertures (13, 13', 13") disposées chacune pour se superposer à un élément de fixation (11, 11', 11") vu dans une direction (dA) parallèle à l'axe de rotation (Ax) lorsque la plaque de protection (5) est au niveau d'une position de rotation relative prédéterminée par rapport à l'unité de coupe (3'),
**caractérisé en ce que** la plaque de protection (5) comprend au moins un trou traversant (6) disposé à une première distance radiale (r1) de l'axe de rotation (Ax), l'au moins un trou traversant (6) de la plaque de protection (5) étant séparé du nombre d'ouvertures (13, 13', 13") de la plaque de protection (5), et
dans lequel le disque de coupe (3) comprend un certain nombre de trous traversants (4, 4', 4") non obstrués disposés chacun de telle sorte qu'au moins une partie de l'au moins un trou traversant (6) de la plaque de protection (5) se superpose à au moins une partie d'un trou traversant (4, 4', 4") du nombre de trous traversants (4, 4', 4") du disque de coupe (3) vu dans une direction (dA) parallèle à l'axe de rotation (Ax) lorsque la plaque de protection (5) est au niveau de la position de rotation relative prédéterminée par rapport au disque de coupe (3),
et dans lequel l'au moins un trou traversant (6) de la plaque de protection (5) et le nombre de trous traversants (4, 4', 4") du disque de coupe (3) sont conçus de telle sorte qu'un objet allongé (18) peut être inséré dans l'au moins un trou traversant (6) de la plaque de protection (5) et dans un trou traversant (4, 4', 4") du disque de coupe (3) pour bloquer en rotation la plaque de protection (5) sur le disque de coupe (3).

2. Agencement de coupe (1) selon la revendication 1, dans lequel la première distance radiale (r1) est d'au moins 50 % du rayon (r) de la plaque de protection (5).

3. Agencement de coupe (1) selon la revendication 1 ou 2, dans lequel chacun du nombre de trous traversants (4, 4', 4") du disque de coupe (3) est disposé à la première distance radiale (r1) de l'axe de rotation (Ax).

4. Agencement de coupe (1) selon l'une quelconque des revendications précédentes, dans lequel le diamètre (D6) de l'au moins un trou traversant (6) de la plaque de protection (5) correspond sensiblement au diamètre (D4) de chacun du nombre de trous traversants (4, 4', 4") du disque de coupe (3).

5. Agencement de coupe (1) selon l'une quelconque des revendications précédentes, dans lequel chacun de l'au moins un trou traversant (6) de la plaque de protection (5) et chacun du nombre de trous traversants (4, 4', 4") du disque de coupe (3) a un diamètre (D4, D6) de plus de 2 mm.

6. Agencement de coupe (1) selon l'une quelconque des revendications précédentes, dans lequel le disque de coupe (3) comprend deux à six trous traversants (4, 4', 4"), de préférence trois trous traversants (4, 4', 4"), également espacés.

7. Agencement de coupe (1) selon l'une quelconque des revendications précédentes, dans lequel la plaque de protection (5) comprend le même nombre d'ouvertures (13, 13', 13") que le nombre d'éléments de coupe (30, 30', 30").

8. Agencement de coupe (1) selon l'une quelconque des revendications précédentes, dans lequel le disque de coupe (3) comprend au moins un marquage (m2, m2', m2") permettant d'indiquer lorsque la plaque de protection (5) est au niveau de la position de rotation relative prédéterminée par rapport à l'unité de coupe (3').

9. Tondeuse à gazon (2) comprenant un corps de tondeuse à gazon (2') et un moteur (45) configuré pour faire tourner l'unité de coupe (3') autour de l'axe de rotation (Ax), et dans laquelle la tondeuse à gazon (2) comprend un agencement de coupe (1) pour tondeuse à gazon selon l'une quelconque des revendications précédentes.

10. Tondeuse à gazon (2) selon la revendication 9, dans laquelle le corps de tondeuse à gazon (2') comprend au moins une structure (8), et dans laquelle l'au moins une structure (8), l'au moins un trou traversant (6) de la plaque de protection (5), et le nombre de trous traversants (4, 4', 4") du disque de coupe (3) sont disposés de telle sorte qu'au moins une partie de l'au moins un trou traversant (6) de la plaque de protection (5) et au moins une partie de l'un du nombre de trous traversants (4, 4', 4") du disque de coupe (3) se superposent à l'au moins une structure (8) vue dans une direction (dA) parallèle à l'axe de rotation (Ax) lorsque la plaque de protection (5) et l'unité de coupe (3') sont au niveau d'une position de rotation relative prédéterminée respective par rapport au corps de tondeuse à gazon (2').

11. Tondeuse à gazon (2) selon la revendication 10, dans laquelle l'au moins une structure (8) est disposée à la première distance radiale (r1) de l'axe de rotation (Ax).

12. Tondeuse à gazon (2) selon la revendication 10 ou 11, dans laquelle l'au moins une structure (8) comprend un ou plusieurs parmi un trou, une ouverture, un évidement et une saillie.

13. Tondeuse à gazon (2) selon l'une quelconque des revendications 9 à 12, dans laquelle le corps de tondeuse à gazon (2') comprend au moins un marquage (m3) permettant d'indiquer lorsque la plaque de protection (5) et l'unité de coupe (3') sont au niveau d'une position de rotation relative prédéterminée respective par rapport au corps de tondeuse à gazon (2').

14. Tondeuse à gazon (2) selon l'une quelconque des revendications 9 à 13, dans laquelle la tondeuse à gazon (2) est une tondeuse à gazon robotique automotrice (2).
